# EUROPEAN PATENT SPECIFICATION

(11) **EP 2 576 027 B1**
(45) Date of publication and mention of the grant of the patent: **26.08.2020**
(21) Application number: 11790058.9
(22) Date of filing: 31.05.2011
(51) Int. Cl.: B01D 67/00, B01D 61/00, B01D 61/02, B01D 61/14, B01D 71/06, B01D 71/16, B01D 71/60, B01D 71/56

(54) **THIN FILM COMPOSITE MEMBRANES**
DÜNNSCHICHTKOMPOSITMEMBRANEN
MEMBRANES COMPOSITES EN COUCHES MINCES

(30) Priority: 04.06.2010 NO 20100814
(43) Date of publication of application: 10.04.2013
(73) Proprietor: Nilsen, Tom Nils, 7054 Ranheim (NO)
(72) Inventor: ALSVIK, Inger Lise, N-7014 Trondheim (NO)
(74) Representative: Acapo AS
(86) International application number: PCT/NO2011/000162
(87) International publication number: WO 2011/152735

(56) References cited:
- EP-A1- 0 313 354
- EP-A1- 1 488 846
- WO-A1-93/23155
- WO-A1-2007/035019
- WO-A2-01/78882
- JP-A- H09 271 647
- US-A- 4 606 943
- US-A1- 2008 296 225
- GHOSH A K ET AL: "Impacts of support membrane structure and chemistry on polyamide-polysulfone interfacial composite membranes", JOURNAL OF MEMBRANE SCIENCE, ELSEVIER BV, NL, vol. 336, no. 1-2, 1 July 2009 (2009-07-01), pages 140-148, XP026090968, ISSN: 0376-7388, DOI: 10.1016/J.MEMSCI.2009.03.024 [retrieved on 2009-03-28]

## Description

The present invention relates to a process for the preparation of a hydrophilic thin film composite membrane, and to uses of the thin film membranes obtained by the method. The thin film composite membranes are prepared by interfacial polymerisation, in particular through the reaction of polyfunctional acyl halides with polyfunctional amines where the polyfunctional acyl halide is applied first to the support medium.

The method according to the invention produces membranes, suitable for osmosis applications, including reverse osmosis applications and pressure retarded osmosis applications, for example power production, water treatment or the like, and having an improved (i.e. reduced) water flow resistance. The invention thus further provides an improved osmotic membrane, and a method for the desalination of water and a method of pressurisation of saline water in pressure retarded osmosis (PRO), and a method of concentrating solutions using forward osmosis (FO), comprising passing water through the improved membrane.

Interfacial polymerisation (IP) is a procedure used for rapid preparation of high molecular weight polymer thin films at room temperature. IP films are most commonly used as the rejection layer in separation membranes, but other uses include sensors, encapsulation for applications such as drug delivery, chemical separations and desalination. Polyamide films, in particular, are employed in the manufacture of reverse osmosis (RO) and nanofiltration membranes. However, while these materials have an acceptable salt rejection level, they have rather low water permeability, both properties which stem from the rigid cross-linked structure. The membranes of the prior art also commonly suffer from low durability or resistance to compression, sensitivity to extremes of pH or temperature, and lack of resistance to microbial attack or oxidation by chlorine in the feed water.

In IP, the polymerisation takes place at the interface between two immiscible phases upon contact. To provide stability to the thin film, IP is frequently conducted on the surface of a microporous substrate, by first saturating the support with a water-based reagent and then bringing it into contact with an organic phase. This type of Thin Film Composite (TFC) was first introduced by Cadotte (see US 4039440) and this is still the main type of membrane used in reverse osmosis and nanofiltration.

IP proceeds through polymerization of two fast reacting intermediates at the interface between two immiscible liquid phases. The film tends to form and grow in the organic phase because of the low solubility of the acyl halide in water and relatively good solubility of the amine in the organic phase. The relative diffusion rate of the two reactants determines the rate of polymerisation on each side of the polymer film formed. The reaction is extremely fast and the film is instantaneously formed at the interface. The continued polymerization leads to the formation of a dense layer that hinders diffusion of the amines and acyl halides across the film, hence such films are typically very thin. The reactant diffusion rates and their relative diffusion rate are dependent on the swelling capacity of the polymer by the solvents used and the solubility of the reactants in the solvent mixture inside the film. Hence, the thickness of the formed film varies with the type of reactants, solvents, concentration, and reaction time, ranging from 10 nm to several micrometers.

The reverse osmosis (RO) process which relies on the semi-permeable character of a polymeric membrane to reject salt and let water pass is an efficient technique to desalt seawater. The development of thin-film composite (TFC) membranes was a major breakthrough in the field of membrane science and technology, allowing improvement of the solute separation ability and efficiency. TFC membranes are characterized by an ultra-thin selective barrier layer laminated on a chemically different porous substrate, which is typically asymmetric, but not necessarily. The selective layer is the key component controlling the separation properties of the membrane, while the porous substrate gives the necessary mechanical strength. The porous support influences though the water and salt fluxes by its thickness, porosity and hydrophilic character. Composite membranes have advantages over single-material asymmetric membranes in that the selective layer is formed in situ so the chemistry and performance of the top barrier layer and the bottom porous substrate can be independently studied and optimized to maximize the overall membrane performance. TFC RO membranes have become dominant in the market because they offer a combination of high flux and high selectivity over other types of RO membranes. At present, most commercial TFC RO membranes are based on polyamide thin films.

The pressure retarded osmosis (PRO) process also relies on the semi-permeable character of a polymeric membrane to reject salt and let water pass, but in this case the character of the porous support membrane to let salt diffuse out is of crucial importance due to the opposite direction of the water flow and the salt flow. Also the water resistance at the interface of the two membranes is crucial to the performance of a PRO membrane.

Utilization of PRO in power generation (US 3906250 and US 4193267) has so far been limited by the poor performance of membranes.

US 4277344 (granted to Cadotte) discloses a technique for preparing an aromatic polyamide film by interfacial-polymerization of two primary amine substituents-containing aromatic polyfunctional amines with at least three acyl halide functional groups-containing aromatic acyl halides. In the preferred embodiment, a porous polysulfone support is coated with m-phenylenediamine in water. After removal of excess m-phenylenediamine solution from the coated support, the coated support is covered with a solution of trimesoyl chloride (TMC) dissolved in FREON (trichlorotrifluoroethane).

Although the Cadotte membrane exhibits good flux and salt rejection, various approaches have been taken to further improve the flux and salt rejection of composite polyamide reverse osmosis membranes. In addition, other approaches have been taken to improve the resistance of said membranes to chemical degradation and the like. Many of these approaches have involved the use of various types of additives to the solutions used in the interfacial polymerization. In spite of the large amount of research which has been carried out in this area, there is still significant interest in developing more energy-efficient, contaminant selective, and fouling resistant TFC membranes for various applications. In particular, TFC membranes with improved water flux without reduced salt rejection are of interest and research has focused on improvement either through design and synthesis of new polymers forming thin films of the TFC membranes or by physical/chemical modification of the existing thin-films. The fouling properties of TFC membrane is of special interest searching for hydrophilic supports.

Recent developments in the field are described by S. Yu (Journal of Membrane Science, 342 (2009) pp. 313-320). Variation of polyacyl halide compounds, to form polymer films resulted in membranes having a higher flux, but these had lower salt rejection relative to the fully aromatic composite. The chemical modification of diamine has also been studied with this goal in mind. These modifications result in TFC membranes of enhanced water flux but simultaneously an accompanying and considerable loss of salt rejection or vice versa. Additionally, other methods such as optimizing the formation of the thin-film by using solvent additives, or a catalyst, chemical modification of the aromatic polyamide thin-film after its formation, and/or treating the active skin layer of the membrane with ammonia or alkylamines have also been adopted to enhance water permeability of the TFC polyamide RO membranes at the expense of the salt rejection.

Traditionally, Thin Film Composite (TFC) membranes are made by soaking a porous membrane in amine/water solution, as disclosed in US 4277344. The amine-soaked membrane is then soaked in a solution of an acid chloride in an organic solvent. When the two immiscible monomer solutions are brought into contact, the monomers partition across the liquid-liquid interface and react to form a polymer. As the reaction continues, polymer film is formed at the interface, but the film is usually very thin because the growing interfacial polymer behaves as a barrier to diffusion of the monomers, and the polymerization levels off. Thus the IP method originally developed by Cadotte may be schematically described as:
A) Furnishing a polysulfone microporous support,
B) Coating, dipping or otherwise furnishing an amine comprising aqueous solution to the support such that it is essentially filled by this fluid,
C) Applying a halide comprising solution to the amine containing support, in which the halide solution is not water-soluble.

Despite the large amount of research which has been conducted in this area, there is still a need for membranes having improved water flux and improved fouling resistance. On a microporous support the current inventors have found that the inversion of steps B and C leads to significant improvements in these properties. By coating or filling the microporous support with the halide phase, such that the reaction occurs by the later application of the amine, the membrane produced has improved water flux and the possibility of using hydrophilic substrates gives improved fouling properties.

There is a general prejudice in the art against the reversal of steps B and C, because the wetting of the support by the amine comprising aqueous solution is very easy, and the polymerisation reaction occurs mainly in the organic phase.

US2008/296225 describes water permeable membranes and methods of forming water permeable membranes comprised of a cross-linked polyamide contating at leaste one bifunctional additive.

EP1488946 describes a composite semipermeable membrane useful for selective separation of a liquid mixture.

US5049167 describes a composite membrane useful for gas separation or pervaporation, wherein the membrane has three layers; a microporous substrate, an intermediate sealing layer, and a top permselective layer.

The current inventors have developed a process for the production of improved TFC membranes, which show very positive osmotic properties. The membranes produced by the process of the invention are formed on a hydrophilic porous support. In addition, the membrane formed are chemically bound to the microporous support, which addresses the problems that the membranes of the prior art have had with delamination in some applications. The produced TFC membranes have a lower flow resistance of water on the interface between the two layers because the selective membrane faces the more hydrophilic surface towards the support.

Using the method of the invention, the surface of the membrane has amine groups which can react with other groups. For example they can be used to attach ionic groups on the membrane surface forming an electrical layer which will improve the salt rejection.

### Summary of Invention

A first aspect of the present invention relates to a process for the preparation of a hydrophilic thin film composite membrane, said process comprising:
(I) applying to a hydrophilic porous support a first liquid phase comprising at least one polyfunctional acyl halide having two or more acid halide groups in an inert solvent, wherein the porous support has protic groups selected from -OH, - NH₂ and/or -NH- on the surface, wherein the support comprises cellulose acetate or regenerated cellulose acetate, and wherein the acyl halides form a covalent bond with the porous support, and thereafter
(II) contacting said porous support with a second liquid phase comprising at least one polyfunctional amine having at least two amine functional groups; so as to form a thin film composite.

Preferred embodiments are given in the dependent claims 2 to 9.

Viewed from another aspect the invention provides a thin film composite obtainable by the process as hereinbefore defined.

Viewed from another aspect the invention provides the use of the thin film composite obtainable by the process as hereinbefore defined in osmotic membranes, gas separation, nanofiltration, reverse electro dialysis and/or fuel cells.

Viewed from another aspect the invention provides an osmotic method for the desalination of water comprising passing water through the thin film composition as hereinbefore defined.

Viewed from another aspect the invention provides the use of the thin film composite obtainable by the process as defined above, for the pressurization of water for power production comprising passing water through the thin film composite.

### Definitions

The term thin film composite is used herein to define the combination of a porous support on which is carried a thin film formed by the interfacial polymerisation reaction of the polyfunctional acyl halide and polyfunctional amino compounds. The film which forms is inherently very thin due to the speed at which these compounds react and the slow diffusion rate of the compounds through the film formed.

The term inert is used herein with reference to solvents which are inert with respect to the membrane and relevant acyl halide and/or amino groups.

### Detailed Description

The porous support used in the present invention is a microporous support. It is generally formed of a polymeric material containing pore sizes which are permitting the passage of permeate at a sufficient rate. However, the porous support should not have pores which are so big that the membrane cannot tolerate the pressure at which the membrane will be used. The working pressure will depend on the process chosen, for example in pressure retarded osmosis (PRO) the membrane can have larger pores than in reverse osmosis. If the pores are too large the thin film will be punctured by the high pressure. In practical terms the support membrane for a PRO process may have significantly larger pores than membranes intended for RO. In addition, if the pores are too large then the solvent will not be immobilised in the pore structure. The pore size of the support will generally range from 1 to 100 nanometres.

The thickness of the porous support itself is not critical to the present invention, however, the total thickness of the porous support membrane and reinforcement is important in PRO. The porous support is normally not strong enough to withstand the pressure in osmotic processes like RO and PRO, i.e. reinforcement is needed. The reinforcement may be provided by any suitable mean known in the art, such as backing of polyamide web, non-woven polyamide or glass felt, or the reinforcement may be embedded in the substrate. In PRO the total thickness of the porous support and reinforcement should not exceed 100 µm.

The hydrophilic character of the porous support membrane is of great importance in order to have as free flow as possible of the permeate and to have good fouling properties. If a hydrophobic support is used, pressure will be required at the inlet of the pores in order to overcome the capillary forces.

Examples of porous supports include those having surfaces which are capable of reacting with the acyl halide, i.e. having -OH, -NH and/or -NH₂ groups. The porous supports used in the present invention comprises cellulose acetate or regenerated cellulose acetate.

The support may be functionalised to contain a number of groups that will react with the acyl halide and hence form an actual covalent bond between the acyl halide and the support. The support may also inherently contain such groups. Suitable functional groups which can be introduced are amines, hydroxyls or other nucleophilic groups. Obviously, the concentration of acyl halide should be large enough to leave sufficient amount of the acyl halide to form the intended polymer film with the polyfunctional amine applied.

Chemical bonds between the support and separation membrane provide more robust membranes, especially with respect to washing procedures. This is important in both RO and PRO membranes.

This physical attachment also prevents delamination of the membrane from the support, a problem known in prior art composites. It is only by applying the acyl halide first that this advantage of delamination prevention easily can be realised.

For improving the salt rejection the basic concept is to add ions to the membrane surface by a surface reaction of amines with any kind of structure which will increase the ionic load of the surface. Basically by including either positive or negative ions on the membrane the salt rejection will increase greatly.

This polishing step is different from what have been disclosed in the prior art as a number of the compounds added in the present invention react much less well or not at all on these membranes. In order to achieve higher salt rejection ionic groups will be placed on the surface of the separation membrane during or after interfacial polymerization. The ionic groups may be pH dependant such as carboxylic acids or tertiary amines or pH independent ionic groups such as sulfonic acid or quaternary amines.

Carboxylic acids may be attached to the amine surface by using the same type of substances as in the first solution of acid halides and the same examples.

Sulpfonic acids may be attached to the membrane surface by any compound giving free sulfonic acids.

Sulfonic acids may be attached to the amine surface by substances such as sulfonyl chloride e.g. sulfonyl chlorides such as biphenyl-4,4'-disulfonyl chloride, benzene-1,2-disulfonyl chloride, benzene-1,3-disulfonyl chloride, benzene-1,4-disulfonyl chloride Diphenylmethane-4,4'-disulfonyl chloride.

Tertiary, quaternary amines and sulfonic groups may be attached to the acid halide surface after the amine surface has been treated with acid halide.

Examples of tertiary amines that may be attached to the acid halide surface are R₃N (R= any chain such as alkyl, aryl, cyclic or branched and at least one chain contains at least one amine). R may be the same or different from each other. Alkyl groups may be C1 - C18, preferably C1 - C8. The aryl groups may be unsubstituted or full substituted, preferably unsubstituted to tri-substituted, the substituents preferably being inert to reactants in the system.

Examples of quaternary amines that may be attached to the acid halide surface are salts of R₄N⁺ (R= any chain such as alkyl, aryl, cyclic or branched and at least one chain contains at least one amine). R may be the same or different from each other. Alkyl groups may be C1 - C18, preferably C1 - C8. The aryl groups may be unsubstituted or full substituted, preferably unsubstituted to tri-substituted, the substituents preferably being inert to reactants in the system.

Sulfonic acids may be attached to the acid halide surface by substances containing protic groups such as OH, NH or NH₂ and at leat one sulfonic group. Examples of such substances are 8-hydroxyquinoline-5-sulfonic acid, 2-aminobenzenesulfonic acid, 3-aminobenzenesulfonic acid, 4-aminobenzenesulfonic acid aniline-2-sulfonic acid, aniline-3-sulfonic acid, aniline-4-sulfonic acid.

The porous support may be flat or hollow fibre, being reinforced or not, asymmetric or symmetric.

### Polyfunctional Acyl Halide

The support structure is wetted by a first liquid phase which contains a solution of at least one polyfunctional acyl halide in an inert solvent, preferably an aprotic solvent. The term wetting is used herein to mean applying the first liquid phase so that it enters the pores of the support without applying pressure. Preferably the first liquid phase is applied so as to completely enter i.e. saturate the pores of the support. Solvents which may be used are dimethylsulfoxide (DMSO), dimethylformamide (DMF), di-methylethers, di-ethylethers, ethylmethyl-ethers and also mixtures of solvents of the types mentioned. Preferred first solvent in this invention are methyl ethers of glycols, particularly as exemplified by diethyleneglycoldimethylether (Diglym) and ethyleneglycoldimethylether (EGDME).

More preferred acyl halides include, 5-isocyanatoisophthalic chloride (ICIC), cyclohexane-1,3,5-tricarbonyl chloride (HTC), 3,3,5,5-biphenyl tetraacyl chloride (BTEC) and trimesoyl chloride (TMC). The preferred first polymerisable species is trimesoyl chloride (TMC).

One polyfunctional acyl halide can be used on its own or a mixture of polyfunctional acyl halides can be used. It is essential that the polyfunctional acyl halide has two or more acyl halide groups.

It is also preferred if at least one of the acyl halides in step (I) or at least one of the amines in step (II) has at least three functional groups. Thus, if none of the amines have three or more amine groups, at least one of the acyl halides preferably has three or more acyl halide groups. It is preferred if the polyfunctional acyl halide has three or more acyl halide groups.

The polyfunctional acyl halides provide the first monomer needed for the interfacial polymerisation reaction which occurs in the present invention. As a monomer, it will typically be of low molecular weight e.g. 300 g/mol or less. The acyl halides can be aromatic or aliphatic.

Diacyl halides which may be used include oxalyl chloride, succinyl chloride, glutaryl chloride, adipoyl chloride, fumaryl chloride, itaconyl chloride, 1,2-cyclobutanedicarboxylic acid chloride, isophthaloyl chloride, terephthaloyl chloride, 2,6-pyridinedicarbonyl chloride, biphenyl-4,4- dicarboxylic acid chloride, naphthalene-1,4-dicarboxylic acid chloride and naphthalene-2,6-dicarboxylic acid chloride. Preferred diacyl halides in this invention are aromatic halides, particularly as exemplified by isophthaloyl chloride (IPC) and terephthaloyl chloride (TPC).

More preferred acyl halides include 5-isocyanatoisophthalic chloride (ICIC), cyclohexane-1,3,5-tricarbonyl chloride (HTC), 3,3,5,5-biphenyl tetraacyl chloride (BTEC) and trimesoyl chloride (TMC). The preferred first polymerisable species is trimesoyl chloride (TMC).

In one embodiment of the invention it is preferred if a mixture of polyfunctional acyl halides is employed in the first step of the process of the invention.

The polyfunctional acyl halide species is dissolved in the first liquid phase. The first liquid phase is formed by an inert solvent which does not react with the polyfunctional acyl halide. This will preferably be an aprotic solvent. Suitable aprotic solvents for the first liquid phase are organic solvents and may be aromatic or aliphatic. Preferably, the first liquid phase solvent is a hydrophilic solvent.

The polyfunctional acyl halide should be dissolved in the first liquid phase in an amount constituting about 0.05-10 wt%, preferably, 0.15-5 wt%, of the first liquid phase. It will be appreciated that polyfunctional acyl halides react rapidly with water so it is preferred if any solvents employed are thoroughly dried before use. Moreover, the porous support can also be dried before use by immersion in the dried solvent containing a drying agent, e.g. silicagel, before application of the polyfunctional acyl halides.

The application of the first liquid phase to the porous support wets it. Application of the acyl halide solution to the porous support can be accomplished by any convenient technique e.g. by casting, dipping, spraying or immersing the support in the solution. After application, it may be necessary to remove excess polyfunctional acyl halide before application of the polyfunctional amine. This can be achieved by pressing or rolling at pressures sufficient to remove excess solution without damaging the support. Alternatively, a gas can be used to dry/blow off excess solution. The skilled man can devise all sorts of ways of achieving the necessary drying step.

After contact with the acyl halide, an extremely hydrophilic support membrane is formed if the surface of the support contains protic groups such as -OH, -NH- or -NH₂. This will increase the water flux which is highly advantageous for RO and PRO.

### Polyfunctional Amine

After the acyl halide has been applied, the polyfunctional amine is applied, preferably in solution. Solvents which may be used are dimethylsulphoxide (DMSO), dimethylformamide (DMF), di-methylethers, di-ethylethers, ethylmethyl-ethers and water, and also mixtures of solvents of the types mentioned. Preferred second solvents in this invention are water and methyl ethers of glycols, particularly as exemplified by diethyleneglycoldimethylether (Diglym) and ethyleneglycoldimethylether (EGDME).

The polyfunctional amine is essentially an amine having at least two amine functional groups. The amine functional group is typically a primary or secondary amine functional group. As noted above however, the use of tri functional (or more) amines is also contemplated, especially where the acyl halide employed is not trifunctional. The polyfunctional amine is a monomer so will typically be of low Mw, e.g. less than 250 g/mol. The polyfunctional amine may be aromatic or aliphatic, e.g. cycloaliphatic. Preferred polyfunctional amines are aromatic (e.g. m-phenylenediamine (m-PDA), p-phenylenediamine (p-PDA), 1,3,5-triaminobenzene, 1,3,4-triaminobenzene, 3,5-diaminobenzoic acid, 2,4-diaminotoluene, 2,4-diaminoanisole, and xylylenediamine) or aliphatic (e.g., ethylenediamine, propylenediamine, and tris(2-diaminoethyl)amine).

Highly suitable compounds include piperazine or derivatives thereof such as 2-methylpiperazine, 2,5-dimethylpiperazine and piperazine itself. The preferred second polymerisable species is phenylenediamine e.g. m-PDA.

The use of primary polyfunctional amines is preferred.

The polyfunctional amine is dissolved in the second fluid phase. This phase is preferably a liquid although feasibly, the polyfunctional amine could be applied as a vapour. The second fluid phase contains a solvent which may be protic or aprotic. Water is therefore a potential option here however it is preferred if the solvent used is aprotic. The solvent may be aromatic or aliphatic. In one embodiment, the second fluid phase may employ the same solvent as the first liquid phase. The current process can form a membrane even when using the same solvent in the first and second liquid phases, since the first liquid phase solution is immobilized and thus forms a boundary layer.

It is conventional in the art to use immiscible solvents to ensure the formation of a boundary for interfacial polymerisation to occur. By reversing the conventional order of reaction and applying the polyfunctional acyl halide first, the inventors have found that a boundary exists for interfacial polymerisation simply because the acyl halide solution becomes immobilised in the support. This therefore allows the use of any solvent with the amine and not just one which has to be immiscible with the solvent used for the acyl halide. This therefore means that water and other protic solvents which could react with the components in surface modifying reaction, and which are hard to remove, can be completely avoided. It is especially preferred therefore if the solvent for the polyfunctional amine is not water.

The polyfunctional amine may be present in the second liquid phase in an amount constituting about 0.01 - 2.0 wt%, more preferably, 0.03 - 1.0 wt%, of the aqueous solution.

It may be necessary to buffer the amine used e.g. to a pH of 7 to 13. Suitable buffers are well known and include camphor sulfonic acid/triethyl amine buffer.

The polyfunctional acyl halide and polyfunctional amino compounds are mutually reactive by interfacial polymerisation to form a solid polymer that is insoluble in said first and second liquid phases and that adheres to the porous support. No specific reaction conditions are needed as the reaction is rapid and easy. Ambient temperature and pressure can be used. It may be necessary to employ a base to neutralise the acid formed during the polymerisation reaction. The presence of this acid as a reaction product will slow the polymerisation so its neutralisation is preferred.

The materials formed in the present invention are thin film composites. They are formed from the porous support and an ultrathin film on top. The thickness of that film is typically of the order of 10 to 100 nm, preferably 20 to 50 nm.

Application of the polyfunctional amine solutions to the porous support can be accomplished by any convenient technique e.g. by casting, dipping, spraying or immersing the support in the solution as discussed above in connection with acyl halide application. If the pores on both sides of the support are sufficiently small for the film formed to withstand the osmotic pressure, only one sided application should be used as to achieve one sided coating.

A particularly preferred combination involves the use of a cellulosic support with a trimesoyl chloride (TMC) and a phenylene diamine.

After the polymerisation, the thin film composite is preferably dried. This can employ ambient temperature or slightly elevated temperature or perhaps exposure to an inert gas flow and so on. The drying process is not to do any harm to neither the film nor the support.

The membrane formed may be post-treated by a number of methods known in the art. A preferred treatment is to react the film with the further fluid phase containing acyl halide, e.g. polyfunctional acyl halide as hereinbefore defined. This will give a membrane surface with organic acid groups increasing the salt rejection.

Any post-formation modification method can be employed as is well known in the art. Thus, post-treatment of the polymer film to attach a strong acid can enhance the salt rejection.

The present inventors have found that the process described above allows the use of highly hydrophilic supports previously not usable for the formation of thin film composites.

The thin film composites of the invention offer excellent selective permeability properties and therefore have applications as osmotic membranes, e.g. reverse osmosis membranes and pressure retarded osmosis, and in gas separation in general. These membranes are used in power production, water purification, gas separation and the like.

An important feature of the invention is that the formed membranes are also hydrophilic and therefore offer less resistance to water flow than prior art membranes in which the interfacial polymerisation on the support is carried out the other way round (i.e. with polyfunctional amine applied to the support first). The interface between the two layers typically forms a hindrance to water flow. This can be measured in terms of salt rejection and in particular permeate water flux. However, in the current invention the interface between the support and the separation membrane is typically also hydrophilic, resulting in an improved water flux. The presence of ionic groups on the surface of the separation membrane results in an improved salt rejection. Our membranes can exhibit a flux of the order of 3 x 10⁻¹² m³/m²sPa in RO for a feed solution of 0.3 wt.% NaCl at a pressure difference of 13 x 10⁵ Pa with organic acids on the surface.

The inversed process thus makes it very easy to manipulate the system giving higher water flux and higher salt retention in osmotic processes.

### Examples

### Materials:

MDA (1), PDA (2) and TMC (3) from Aldrich and camphorsulfonic acid (CSA) and triethylamine (TEA) from Merck were used. The bottles of MDA and TMC were flushed with argon gas after use to reduce decomposition. The ethylene glycol diethyl ether used as solvent was dried over a column of anhydrous Al₂O₃ and stored over activated molecular sieves (4 Å). Regenerated cellulose acetate (RCA) from Alpha-Laval was used as the porous support in all examples.

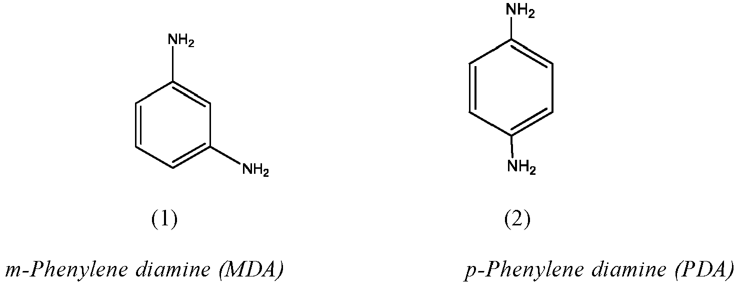

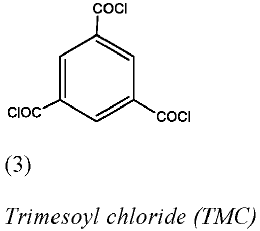

### Experimental:

RCA membranes were soaked in ethylene glycol diethyl ether (EGDE) overnight (> 12 h). The membranes were soaked for a certain period of time (30 s to 120 s) in a solution of TMC in EGDE. The excess solvent on the membrane was removed using paper tissues and a rubber roller. The membranes were dried under argon or *in vacuo* for a certain period of time (30 min to 90 min). A solution of MDA (or PDA), CSA and TEA in water were prepared and the membranes were soaked for 30 s to 90 s. Excess solvent was removed by paper tissues and a rubber roller and the membranes were soaked in a solution of TMC in c-Hexan. The membranes were air dried (30 min to 1 hour) and soaked in water for storage.

**Table 1: Formulations**

| | Ex 1(g/g solvent) | Ex 2 (g/g solvent) | Ex 3 (g/g solvent) |
|---|---|---|---|
| TMC (in EGDE) | 0.0018 | 0.0026 | 0.0031 |
| MDA (in water) | 0.0029 | 0.0053 | 0.0070 |
| TMC (in c-Hexane) | 0.0043 | 0.0026 | 0.0048 |
| CSA (in water) | 0.01 | 0.01 | 0.01 |
| TEA (in water) | 0.01 | 0.01 | 0.01 |

**Table 2: Residence time**

| | Ex 1 (s) | Ex 2 (s) | Ex 3 (s) |
|---|---|---|---|
| TMC/EGDE | 60 | 60 | 60 |
| Drying after TMC/EGDE | 3000 | 3900 | 9600 |
| MDA/water | 30 | 30 | 30 |
| TMC/c-Hexane | 30 | 30 | 30 |
| Drying after TMC/c-Hexane | 2100 | 1800 | 1800 |

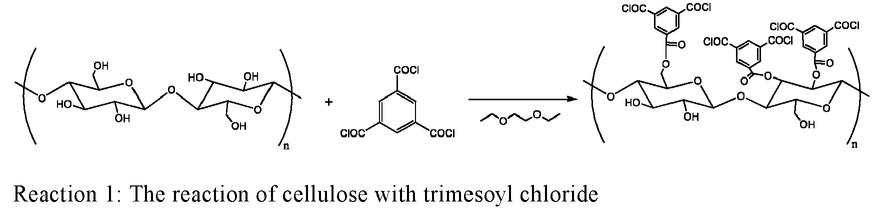

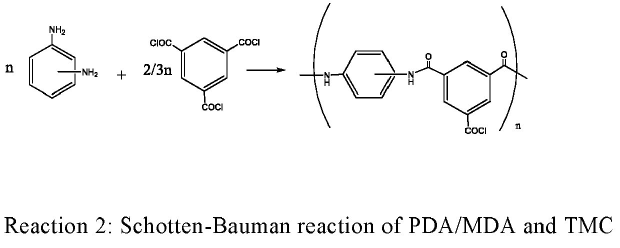

### Results:

The membranes were tested for water flux in a reverse osmosis test cell at 1.3 x 10⁻⁶ Pa with a NaCl concentration of 0.3 wt.%. The salt retention was tested by measuring the conductivity in the permeate.

**Table 3: Flux and salt retention of membranes (Feed: 0.3 wt.% NaCl in water).**

| Membrane | Flux (m³/m²sPa) | Salt retention (%) |
|---|---|---|
| Ex 1 | 3 x 10⁻¹² | 94 |
| Ex 2 | 2 x 10⁻¹² | 97 |
| Ex 3 | 1 x 10⁻¹² | 93 |

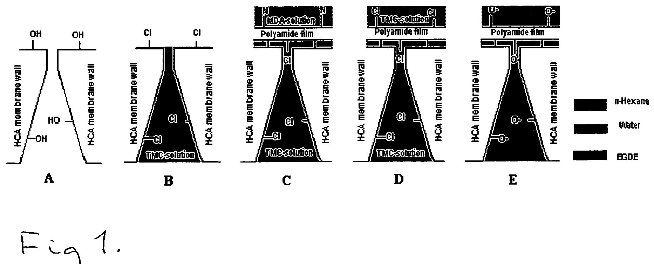

## Claims

1. A process for the preparation of a hydrophilic thin film composite membrane, said process comprising:
(I) applying to a hydrophilic porous support a first liquid phase comprising at least one polyfunctional acyl halide having two or more acid halide groups in an inert solvent, wherein the porous support has protic groups selected from -OH, - NH₂ and/or -NH- on the surface, wherein the support comprises cellulose acetate or regenerated cellulose acetate, and wherein the acyl halides form a covalent bond with the porous support, and thereafter
(II) contacting said porous support with a second liquid phase comprising at least one polyfunctional amine having at least two amine functional groups; so as to form a thin film composite.

2. A process as claimed in claim 1 further comprising a step (III), wherein the formed membrane is post-treated by applying a liquid phase comprising at least one polyfunctional acyl halide having two or more acid halide groups in an inert solvent.

3. A process as claimed in claim 1 or 2 wherein either at least one of the acyl halides in step (I) and (III) or at least one of the amines in step (II) has at least three functional groups.

4. The process according to any preceding claim wherein the polyfunctional acyl halide has at least two acid halide groups and/or is preferably selected from the group consisting of trimesoyl chloride, cyclohexane-1,3,5-tricarbonyl chloride and 3,3,5,5-biphenyl tetraacyl chloride.

5. The process according to any preceding claim wherein the polyfunctional amine has at least two amine functional groups, and/or is preferably selected from the group consisting of meta-phenylene diamine, para-phenylene diamine, 1,3,5-triaminobenzene and 1,3,4-triaminobenzene.

6. The process according to any preceding claim wherein the first liquid phase and/or the second liquid phase and/or the liquid phase of phase III comprise diethyleneglcol dimethyl ether, ethyleneglycol dimethylether or ethyleneglycol diethylether.

7. The process according to any preceding claim wherein the second liquid phase comprises water, an alkane or lamp oil.

8. The process as claimed in claim 2, wherein the liquid phase of step III comprises an alkane or lamp oil.

9. The process according to any one of the preceding claims wherein ionic groups are placed on the surface of the thin film composite membrane.

10. A thin film composite prepared on a porous support, obtainable by the process according to any of the claims 1 to 9.

11. Use of the thin film composite according to claim 10 in osmotic processes, reverse osmosis, gas separation, nanofiltration, reverse electro dialysis and/or fuel cells.

12. Method for the desalination of water comprising passing water through the thin film composite according to claim 10.

13. Method for the pressurization of water for power production comprising passing water through the thin film composite according to claim 10.

## Patentansprüche

1. Verfahren zur Herstellung hydrophilen Dünnschicht-Verbundmembran, wobei das Verfahren folgendes umfasst:
(I) Applizieren einer ersten flüssigen Phase, die mindestens ein polyfunktionales Acylhalid mit zwei oder mehr Acidhalidgruppen in einem inerten Lösungsmittel umfasst, auf einen hydrophilen porösen Träger, wobei der poröse Träger auf der Oberfläche protische Gruppen aufweist, die ausgewählt sind aus -OH, -NH2 und/oder -NH-, wobei der Träger Zelluloseacetat oder regeneriertes Zelluloseacetat umfasst, und wobei die Acylhalide eine kovalente Bindung mit dem porösen Träger bilden, und danach
(II) Inkontaktbringen des porösen Trägers mit einer zweiten flüssigen Phase, die mindestens ein polyfunktionales Amin umfasst, mit mindestens zwei funktionellen Amingruppen, so dass ein Dünnschichtverbundstoff gebildet wird.

2. Verfahren nach Anspruch 1, das ferner einen Schritt (III) umfasst, wobei die gebildete Membran nachbehandelt wird durch Applizieren einer flüssigen Phase, die mindestens ein polyfunktionales Acylhalid mit zwei oder mehr Acidhalidgruppen umfasst, in einem inerten Lösungsmittel.

3. Verfahren nach Anspruch 1 oder 2, wobei entweder wenigstens eines der Acylhalide in Schritt (I) und (III) oder wenigstens eines der Amine in Schritt (II) mindestens drei funktionelle Gruppen aufweist.

4. Verfahren nach einem der vorstehenden Ansprüche, wobei das polyfunktionale Acylhalid mindestens zwei Acidhalidgruppen aufweist und/oder vorzugsweise ausgewählt ist aus der Gruppe bestehend aus Trimesoylchlorid, Cyclohexan-1,3,5-tricarbonylchlorid und 3,3,5,5-Biphenyltetraacylchlorid.

5. Verfahren nach einem der vorstehenden Ansprüche, wobei das polyfunktionale Amin mindestens zwei funktionelle Amingruppen aufweist und/oder vorzugsweise ausgewählt ist aus der Gruppe bestehend aus Metaphenylendiamin, Paraphenylendiamin, 1,3,5-Triaminobenzol und 1,3,4-Triaminobenzol.

6. Verfahren nach einem der vorstehenden Ansprüche, wobei die erste flüssige Phase und/oder die zweite flüssige Phase und/oder die flüssige Phase von Phase III Diethylenglykoldimethylether, Ethylenglykoldimethylether oder Ethylenglykoldiethylether umfasst.

7. Verfahren nach einem der vorstehenden Ansprüche, wobei die zweite flüssige Phase Wasser, ein Alkan oder Leuchtöl umfasst.

8. Verfahren nach Anspruch 2, wobei die flüssige Phase aus Schritt III ein Alkan oder Leuchtöl umfasst.

9. Verfahren nach einem der vorstehenden Ansprüche, wobei ionische Gruppen auf der Oberfläche der Dünnschicht-Verbundmembran platziert werden.

10. Dünnschichtverbundstoff, erzeugt auf einem porösen Träger, erhaltbar durch das Verfahren nach einem der Ansprüche 1 bis 9.

11. Verwendung des Dünnschichtverbundstoffs nach Anspruch 10 in einem osmotischen Prozess, Umkehrosmose, Gasabscheidung, Nanofiltration, umgekehrter Elektrodialyse und/oder Brennstoffzellen.

12. Verfahren zur Entsalzung von Wasser, umfassend das Leiten von Wasser durch den Dünnschichtverbundstoff nach Anspruch 10.

13. Verfahren zur Druckbehandlung von Wasser zur Energieerzeugung, umfassend das Leiten von Wasser durch den Dünnschichtverbundstoff nach Anspruch 10.

## Revendications

1. Procédé de préparation d'une membrane composite hydrophile en couche mince, ledit procédé comprenant les étapes consistant à :
(I) appliquer sur un support poreux hydrophile une première phase liquide comprenant au moins un halogénure d'acyle polyfonctionnel ayant au moins deux groupes halogénure d'acide dans un solvant inerte, le support poreux ayant des groupes protiques choisis parmi -OH, -NH₂ et/ou -NH- sur la surface, le support comprenant de l'acétate de cellulose ou de l'acétate de cellulose régénéré, et les halogénures d'acyle formant une liaison covalente avec le support poreux, et ensuite
(II) mettre en contact ledit support poreux avec une seconde phase liquide comprenant au moins une amine polyfonctionnelle ayant au moins deux groupes fonctionnels amine ; de sorte à former un composite en couche mince.

2. Procédé selon la revendication 1, comprenant en outre une étape (III), la membrane formée étant post-traitée en appliquant une phase liquide comprenant au moins un halogénure d'acyle polyfonctionnel ayant au moins deux groupes halogénure d'acide dans un solvant inerte.

3. Procédé selon la revendication 1 ou 2, soit au moins l'un des halogénures d'acyle de l'étape (I) et (III), soit au moins l'une des aminés de l'étape (II) ayant au moins trois groupes fonctionnels.

4. Procédé selon l'une quelconque des revendications précédentes, l'halogénure d'acyle polyfonctionnel ayant au moins deux groupes halogénure d'acide et/ou étant de préférence choisi dans le groupe constitué par le chlorure de trimesoyle, le chlorure de cyclohexane-1,3,5-tricarbonyle et le chlorure de 3,3,5,5-biphényltétraacyle.

5. Procédé selon l'une quelconque des revendications précédentes, l'amine polyfonctionnelle ayant au moins deux groupes fonctionnels amine, et/ou étant de préférence choisie dans le groupe constitué par la méta-phénylènediamine, la paraphénylènediamine, le 1,3,5-triaminobenzène et le 1,3,4-triaminobenzène.

6. Procédé selon l'une quelconque des revendications précédentes, la première phase liquide et/ou la seconde phase liquide et/ou la phase liquide de la phase III comprenant de l'éther diméthylique de diéthylèneglycol, de l'éther diméthylique d'éthylèneglycol ou de l'éther diéthylique d'éthylèneglycol.

7. Procédé selon l'une quelconque des revendications, la seconde phase liquide comprenant de l'eau, un alcane ou une huile lampante.

8. Procédé selon la revendication 2, la phase liquide de l'étape III comprenant un alcane ou une huile lampante.

9. Procédé selon l'une quelconque des revendications précédentes, des groupes ioniques étant placés sur la surface de la membrane composite en couche mince.

10. Composite en couche mince préparé sur un support poreux, pouvant être obtenu par le procédé selon l'une quelconque des revendications 1 à 9.

11. Utilisation du composite en couche mince selon la revendication 10, dans des procédés osmotiques, l'osmose inverse, la séparation des gaz, la nanofiltration, l'électrodialyse inverse et/ou les piles à combustible.

12. Procédé de dessalement d'eau comprenant l'étape consistant à faire passer l'eau à travers le composite en couche mince selon la revendication 10.

13. Procédé de pressurisation d'eau pour la production d'énergie comprenant l'étape consistant à faire passer l'eau à travers le composite en couche mince selon la revendication 10.
